# EUROPEAN PATENT APPLICATION

(11) **EP 0 942 212 A1**
(43) Date of publication of application: **15.09.1999**
(21) Application number: 98904174.4
(22) Date of filing: 23.02.1998
(51) Int. Cl.: F16K 27/02

(54) **BUTTERFLY VALVE**

(30) Priority: 30.09.1997 ES 9702495 U
(71) Applicant: Cuenca Del Pino, Angel, 28030 Madrid (ES)
(72) Inventor: Cuenca Del Pino, Angel, 28030 Madrid (ES)
(74) Representative: Perez Bonal, Bernardo
(86) International application number: ES9800039
(87) International publication number: WO9917041

(57) **Abstract**

It is characterized essentially by the fact that, when mounting or dismounting the valve, it is possible to remove or introduce the central body of the valve without having to dismount the valve from the piping. It is comprised of a butterfly-type lock with stem actuated preferably by a quarter-turn control device, characterized in that it incorporates two discs (1) joined by means of screws and provided with oblique and concentric protuberances (1.1) which are antagonist to chamferings (2.1) defined in both faces of an annular elastic seal (2), said seal being provided with two diametrally opposite perforations for the passage of the stem (3) of the butterfly (4), the seal (2) being arranged between two spacer rings (5) with diametrally opposite openings for the passage of the stem (3).

## Description

### OBJECT OF THE INVENTION

The invention here proposed consists of a improved butterfly valve, among the valves provided with this type of butterfly seal, having a quarter-turn pilot and an elastic rubber seal, as well as connections for butt-welding to the piping.

Object of the invention is a new valve construction which allows dismantling its central body with the valve installed by placing this body between two practically flat disc with concentric and angled internal protrusions opposing the beveling of a elastic seal placed between spacers.

### BACKGROUND OF THE INVENTION

Butterfly valves, whether designed for butt-welding or threaded or flanged, are generally constructed in the same way by all manufacturers, varying only the finish of the connections to the piping where they act, opening or closing passage of the corresponding liquids.

The valve object of this invention belongs to the group of valves having a butterfly seal, with a spindle passing through the diametral projections of the conduct, of the type preferably acting with a quarter-turn pilot, as well as incorporating a elastic rubber seal located between the valve body and the inner wall of the conduct, and having end connections for butt-welding to the piping,

The applicant is not aware of any butterfly valves of the type described in this invention, designed for optimised assembly and disassembly of the central body.

### DESCRIPTION OF THE INVENTION

The invention object of the present memory relates to a butterfly valve with an improved construction to allow replacing its central body, without requiring a full disassembly or eliminating the butt welding of the connection.

The invention is a new valve construction with a smaller width than previous valves designed for butt-welding, mainly characterised in that , once installed in the corresponding conduct, it allows disassembly of the valve central body.

To this end the butterfly valve consists of two practically flat disks with concentric and angled internal protrusions, opposing internal bevels of an elastic annular seal designed to guarantee the seal tightness.

The butterfly is associated to the spindle axis, which passes two bores located in opposite ends of a seal diameter.

The two outer faces of the seal containing the butterfly are in contact with the disks, which are placed concentric to the seal and closely pressed to each other by bolts.

In order to prevent the seal from deforming and stopping the butterfly turning due to pressure from the disks, the seal is placed between two identical spacers, the total width of which is slightly less than the seal's, this difference in width being sufficient to slightly deform the seal and make the butterfly-seal union liquid-tight, as well as to close the internal face of the spindle bore.

The disks are designed to incorporate inclined recesses in the face opposite the angled protrusion, allowing the insertion to the stop of the end of each pipe and its suitable welding.

Once the pipe ads are welded to the disks the central body of the valve is placed in-between ad closed by the closing bolts which pass through opposite bores on both disks.

### DESCRIPTION OF THE DRAWINGS

In order to complement the description being made and in order to facilitate a better and easier understanding of the characteristics of the invention, attached to this description, as a integral part of the same, is a set of drawings where in an illustrative and in no case limiting manner the following is shown:

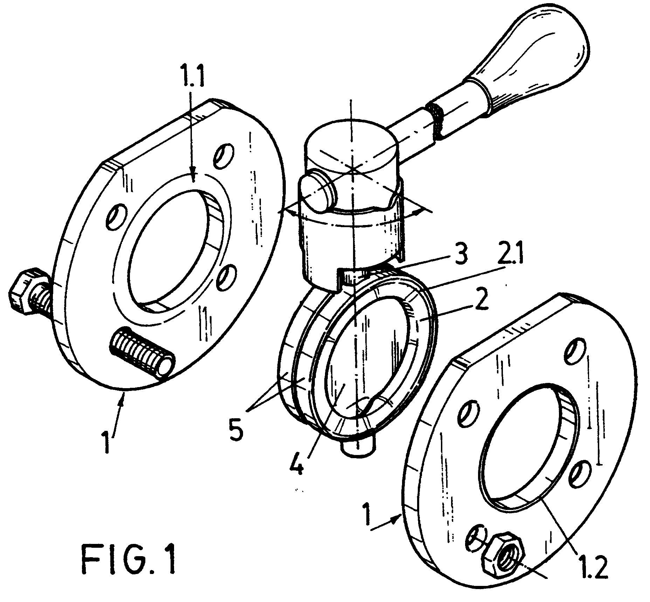

Figure 1 shows an exploded view of the butterfly valve object of the invention, where the end disks and the main body of the valve can be seen.

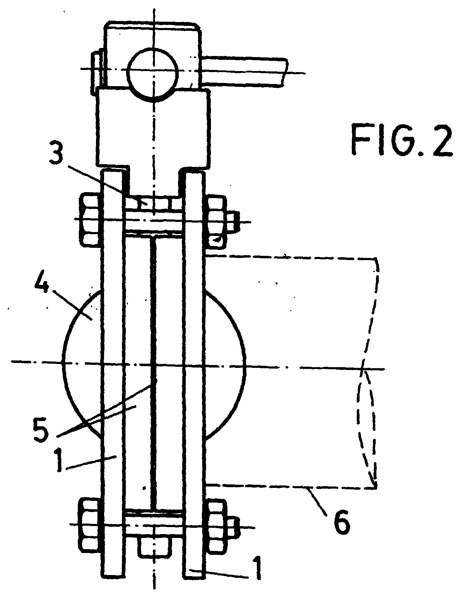

Figure 2 is a side elevation view of the valve.

### PREFFERED EMBODIMENT OF THE INVENTION

In view of the above description, the present invention relates to a butterfly valve, among the type of valves having a butterfly seal with a spindle which are preferably controlled by a quarter-turn pilot, provided with an elastic rubber seal and end connections for butt-welding to the piping, and fundamentally standing out in that during assembly and disassembly the extraction and introduction of the valve central body is simplified, not having to remove the valve from the piping.

The valve is provided with disks(1) with a central opening and concentric and angled protrusions (1.1), opposing bevels (1.2) made in both faces of the annular elastic seal (2), which has two diametral bores for the spindle (3) of the butterfly (4).

In addition it is provided with two spacers (5) with openings for the spindle (3), the total width of the spacers being slightly less than the seal's (2) in order to absorb pressure of the disks and make the butterfly (4) and seal (2) union and the seal (2) bores liquid-tight.

Likewise, concentric recesses (1.2) are Provided at the disk (1) opening to insert and weld each pipe (6) end to the stop.

This description is not extended any further in the understanding that any expert in the field will have sufficient information to understand the scope of the invention and the advantages derived thereof, as well as to reproduce the same.

It is also understood that as long as the essence of the invention is not altered, variations in materials, as well as shape, size and arrangement of the elements are subject to variation within this characterisation.

The terms employed in the description and its meaning must always be taken in a non-limiting way.

## Claims

1. Butterfly valve, among the valves with a butterfly seal and a spindle preferably controlled by a quarter-turn pilot, provided with elastic rubber seals and end connections for butt-welding of the piping, essentially characterised in that it provides two disks (1) with central opening having angled ad concentric protrusions (1.1), opposing bevels (1.2) made in both faces of a annular elastic seal (2), which is provided with two opposing diametral bores for the spindle (3) of butterfly (4), seal (2) being placed between two spacers (5) with diametrally opposite openings for spindle (3), the set formed by spacer (5), seal (2), butterfly (4) with spindle (3) and control being mounted between both disks (1) joined to each other by bolts which allow extraction and introduction of the set without dismantling the valve from the pipe.

2. Butterfly valve as claimed in previous claim, characterised in that the total width of spacers (5) is slightly less than that of seal (2) in order to absorb the pressure from both disks and seal when liquid passes between the butterfly (4) and the seal (2) and through the seal bores.

3. Butterfly valve as claimed in claim 1, characterised in that it is provided with recesses (1.2) concentric to disk (1) openings for insertion and butt-welding of each end of pipe (6).
